# EUROPÄISCHE PATENTSCHRIFT

(11) **EP 3 033 202 B1**
(45) Veröffentlichungstag und Bekanntmachung des Hinweises auf die Patenterteilung: **16.05.2018**
(21) Anmeldenummer: 14750514.3
(22) Anmeldetag: 13.08.2014
(51) Int. Cl.: B23Q 3/06, B25B 1/20, B25B 1/24, B25B 5/00, B25B 5/14

(54) **TWINSPANNER UND VERFAHREN ZUM GLEICHZEITIGEN EINSPANNEN VON ZWEI LANGPROFILABSCHNITTEN**
TWIN CLAMP AND METHOD FOR SIMULTANEOUSLY CLAMPING TWO ELONGATE PROFILE SEGMENTS
DISPOSITIF DE SERRAGE DOUBLE PERMETTANT DE SERRER SIMULTANÉMENT DEUX SEGMENTS DE PROFILÉ ALLONGÉ

(30) Priorität: 16.08.2013 DE 102013108895
(43) Veröffentlichungstag der Anmeldung: 22.06.2016
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/EP2014/067369
(87) Internationale Veröffentlichungsnummer: WO 2015/022382

(56) Entgegenhaltungen:
- DE-A1- 3 532 028
- DE-B3-102010 035 633
- DE-U1- 20 001 092
- FR-A5- 2 062 084
- US-A1- 2010 170 081

## Beschreibung

Die Erfindung betrifft einen Twinspanner und ein Verfahren zum gleichzeitigen Einspannen von zwei Langprofilabschnitten mit dem Twinspanner.

Twinspanner sind im Stand der Technik grundsätzlich bekannt. Enden von abgelängten Rohrabschnitten werden üblicherweise nach dem Ablängen nachbehandelt. Die Nachbehandlung kann in einem Anfasen, Entgraten oder Waschen bestehen. Dabei werden die Rohre an ihren beiden Ende gleichzeitig bearbeitet. Beispielsweise werden eine Innen- oder Außenfase oder ein Planaufmaß an jedes der beiden Rohrenden gefräst. Grundsätzlich wird das Rohr dazu festgespannt, und zwei Bearbeitungsköpfe fahren in Verlängerung der Rohrmittelachse auf die Rohrenden zu und bringen die Fasen und das Planaufmaß durch Drehbewegung des Bearbeitungskopfes auf die Rohrenden auf. Dafür ist es notwendig, dass die Drehachse der Bearbeitungsköpfe und die Rohrmittelachse unabhängig vom Rohrdurchmesser stets exakt in Verlängerung zueinander angeordnet sind. Das heißt, die Drehachse des Bearbeitungskopfes muss exakt auf der Mittelachse des Rohrabschnitts liegen, damit während der Drehbewegung des Bearbeitungskopfes eine Außen- oder Innenfase auf dem Rohrende aufgebracht wird, die entlang des gesamten Rohrumfangs eine gleiche Größe aufweist. Wenn die Rohrmittelachse und die Drehachse des Bearbeitungskopfes versetzt zueinander angeordnet wären, würde durch die Rotationsbewegung des Bearbeitungskopfes ein nachteiliges elliptisches Profil auf das Rohrende gefast werden.

Problematisch ist das Anfasen von Rohrenden insbesondere dann, wenn gleichzeitig zwei Rohre in einem Twinspanner eingespannt werden sollen und die vier Rohrenden der beiden Rohre gleichzeitig mit vier Bearbeitungsköpfen bearbeitet werden. Die abgelängten Rohrabschnitte werden parallel zueinander eingespannt, und die beiden linken sowie die beiden rechten Enden werden jeweils mit einem Paar Bearbeitungsköpfe bearbeitet. Die realtive Position der Drehachsen der beiden Bearbeitungsköpfe einer Seite ist konstant. Problematisch ist das gleichzeitige Bearbeiten von zwei Rohrabschnitten deshalb, weil es im Grunde genommen nie zwei im Außendurchmesser exakt gleiche Rohrabschnitte gibt. Die Rohraußendurchmesser sind in Bruchteilen von Mikrometern stets unterschiedlich, so dass beim gleichzeitigen Einspannen von zwei Rohren zunächst das Problem entsteht, dass bei einem Twinspanner, der über keine Elastizität verfügt, stets nur eines der beiden Rohre zwischen den beiden Spannbacken einer Aufnahme wirklich fest eingespannt ist, während das andere Rohr nicht fest eingespannt ist. Es muss stets ein Ausgleich über irgendeine Elastizität geschaffen werden. Zum anderen besteht das Problem, dass der relative Abstand der Mittelachsen der beiden Rohre nicht vom Rohrdurchmesser abhängen darf. Das heißt, die beiden Mittelachsen müssen im Raum und damit auch zueinander, unabhängig vom Rohrdurchmesser, immer an derselben Stelle sein, damit die beiden Bearbeitungsköpfe immer exakt mit ihrer Drehachse in Verlängerung der Mittelachse der beiden Rohre auf die beiden Rohrenden jeder Seite der beiden Rohrabschnitte verfahren werden können.

Aus der DE 10 2010 035 633 B3 ist eine hydraulische Mehrteile-Spannvorrichtung bekannt, die ein wiederholungsgenaues Bearbeiten und Positionieren langer, stangenartiger Werkstücke in waagerechter Lage mittels aufwendiger Sensorik ermöglicht.

In der DE 41 00 148 A1 ist eine Palette zur Aufnahme und zum Transport von Werkstücken offenbart. Dabei werden chronisch ausgeformte Backen mittels einer Spindel verfahren und können dadurch Werkstücke einspannen.

In der DE 1 552 302 ist ein Spannfutter für Werkzeugmaschinen offenbart, bei dem die Radialverstellung der Spannbacken durch eine Drehbewegung geschieht, wobei zur Erzielung der die Verstellbewegung der Spannbacken hervorrufenden Drehbewegung ein Reduktionsgetriebe in Form eines Planeten-Differenzgetriebes vorgesehen ist, das abkuppelbar mit einem Antriebsmotor verbunden ist.

Die WO 2007/027449 A2 offenbart eine Spannvorrichtung für ein Rohr, bei dem Spannbacken durch Betätigen eines Griffes über ein Getriebe gegeneinander verfahren werden können und dadurch das Rohr einspannen.

Aus der DE 200 01 092 U1 ist eine Spannbackenvorrichtung bekannt, die ein Paar von Spannbacken aufweist, deren Spannbackenarme jeweils auf einer drehantreibbaren Welle, die in einem Spannbackenblock gelagert ist, angeordnet sind, und die eine Antriebseinrichtung aufweist, durch welche die die Spannbackenarme tragenden Wellen über ein Übertragungsgetriebe drehantreibbar sind, wobei die Spannbackenvorrichtung eine Lastmomentensperre aufweist, die der Antriebseinrichtung nachgeschaltet ist und die bewirkt, dass durch die Antriebseinrichtung ein Drehantrieb der Spannbacken in einer Schließ-Drehrichtung und in einer Öffnen-Drehrichtung durchführbar ist und dass durch die Lastmomentensperre rückwirkende Drehmomente der Spannbacken gesperrt sind.

Es ist daher Aufgabe der vorliegenden Erfindung, einen Twinspanner zur Verfügung zu stellen, der die oben genannte Bearbeitung von Enden von Langprofilabschnitten ermöglicht, sowie ein Verfahren zur Verfügung zu stellen, das die oben genannten Probleme löst.

Hinsichtlich der Vorrichtung wird die Aufgabe durch einen Twinspanner mit den Merkmalen des Anspruchs 1 erfüllt.

Der erfindungsgemäße Twinspanner ist vorzugsweise in eine Maschine zum Ablängen von Langprofilen eingebaut. Nachdem Langprofile abgelängt sind, können sie einzeln oder paarweise mittels eines Greifers gegriffen und in den Twinspanner eingelegt werden. Der Twinspanner spannt die beiden Langprofilabschnitte fest ein. Die beiden Langprofilabschnitte sind dabei nebeneinander, vorzugsweise parallel zueinander im Twinspanner angeordnet und werden im eingespannten Zustand einem weiteren Bearbeitungsschritt zugeführt. Der weitere Bearbeitungsschritt kann ein Anfasen der Enden der Langprofilabschnitte sein. Dabei werden die beiden nebeneinander angeordneten Enden der beiden Langprofilabschnitte an zwei rotierende Werkzeugköpfe geführt oder umgekehrt, und zwar derart, dass die beiden Mittelachsen der Langprofilabschnitte mit den beiden Drehachsen der Werkzeugköpfe jeweils identisch sind. Der Twinspanner fixiert oder hält die beiden Langprofilabschnitte in der beschriebenen Position, und die beiden rotierenden Werkzeugköpfe werden entlang der Längsrichtung rotierend gleichzeitig auf die beiden nebeneinder angeordneten Enden der Abschnitte einer Seite geführt und bringen eine Außen- oder Innenfase oder ein Planaufmaß o. Ä. am Ende der Abschnitte auf. Erfindungsgemäß ist die Lage der Mittelachsen der eingespannten Langprofilabschnitte unabhängig von der Größe der Außendurchmesser der Langprofilabschnitte. Dadurch werden die beiden Langprofilabschnitte jedes Arbeitstaktes unabhängig vom Außendurchmesser immer zentrisch gegenüber den beiden Werkzeugköpfen positioniert. Es wird daher bei jedem Arbeitstakt, auch bei variablen Außendurchmessern, der Langprofilabschnitte eine exakt rotationssymmetrische Bearbeitung ihrer Enden durchgeführt. Dabei können die beiden Außendurchmesser der beiden gleichzeitig eingespannten Langprofilabschnitte eines Arbeitstaktes verschieden voneinander sein, und/oder die Außendurchmesser der Langprofilabschnitte verschiedener Arbeitstakte können verschieden voneinander sein.

Üblicherweise werden die vier Enden der beiden Langprofilabschnitte gleichzeitig durch zwei Paare von rotierenden Werkzeugköpfen bearbeitet.

Der erfindungsgemäße Twinspanner weist zwei jeweils zwei verfahrbare Spannbacken aufweisende Aufnahmen auf, mit denen jeweils ein im Querschnitt kreisförmiger Langprofilabschnitt mit jeweils einer Mittelachse und einem Außendurchmesser einspannbar ist, wobei zwei Spannbacken verschiedener Aufnahmen über jeweils ein Differentialgetriebe miteinander gekoppelt sind und zwei Spannbacken derselben Aufnahme über ein Synchrongetriebe miteinander gekoppelt sind und die Lage der Mittelachsen der eingespannten Langprofilabschnitte unabhängig von der Größe der Außendurchmesser der Langprofilabschnitte ist.

Der erfindungsgemäße Twinspanner ermöglicht es, ohne elastische Verformung zwei Langprofilabschnitte, die im Außendurchmesser verschieden sind, fest einzuspannen, unabhängig davon, wie groß der Außendurchmesser der beiden Langprofile innerhalb eines bestimmten vorgegebenen Tolereanzbereiches ist, und darüber hinaus die Lage von Mittelachsen der beiden Langsprofilabschnitte, unabhängig vom Außendurchmesser der Langprofilabschnitte, bei jedem Arbeitstakt im Raum konstant zu halten.

Unter Langprofilabschnitten werden hier Abschnitte länglicher Profile wie Rohre oder Vollprofile verstanden. Die Langprofile weisen einen kreisförmigen Außendurchmesser auf, wobei unter kreisförmig hier auch geringfügige Abweichungen von der exakten Kreisform im Mikrometerbereich verstanden werden. Der Außendurchmesser bezieht sich hier auf den Bereich der Langprofile, die mit den Spannbacken der Aufnahmen beim Spannvorgang in Berührung kommen. Vorzugsweise weisen die Langprofilabschnitte jedoch entlang ihrer gesamten Längsausdehnung eine gleiche Querschnittsform, insbesondere einen gleichen Außendurchmesser auf. Wobei auch hier unter gleicher Querschnittsform und gleichem Außendurchmesser geringfügige Abweichungen im Mikrometerbereich verstanden werden.

Erfindungsgemäß wird der Twinspanner durch einen Zentrischspanner angetrieben, wobei der Zentrischspanner positionsfest mit den beiden Differentialgetrieben verbunden ist und die Differentialgetriebe mittels des Zentrischspanners exakt symmetrisch voneinander weg oder aufeinander zu verfahren werden können entlang einer Längsrichtung, die vorzugsweise exakt senkrecht zu einer Längsausdehnung der beiden eingespannten Langprofilabschnitte verläuft. Es sind jedoch auch gewinkelte Ausführungsformen denkbar, wobei die Längsrichtung in einem Winkel zur Längsausdehnung angeordnet ist. Dieser Winkel ist vorzugsweise unabhängig vom Durchmesser des Langprofilabschnittes konstant.

Vorzugsweise sind eine erste Spannbacke der ersten Aufnahme und eine zweite Spannbacke der zweiten Aufnahme über ein erstes Differentialgetriebe und eine andere erste Spannbacke der ersten Aufnahme und eine andere zweite Spannbacke der zweiten Aufnahme über ein zweites Differentialgetriebe miteinander gekoppelt, und die erste Spannbacke und die andere erste Spannbacke sind über ein erstes Synchrongetriebe und die zweite Spannbacke und die andere zweite Spannbacke über ein zweites Synchrongetriebe miteinander gekoppelt.

Durch eine mechanisch ausgeklügelte Konstruktion wird somit ein festes Einspannen von Langprofilabschnitten unterschiedlicher Durchmesser erzielt.

Günstigerweise umfasst der Twinspanner einen Zentrischspanner, der die beiden Differentialgetriebe relativ zueinander, vorzugsweise exakt symmetrisch verfährt. Zentrischspanner sind ausgereift und daher zuverlässig.

In einer bevorzugten Ausführungsform des Twinspanners ist ein erstes Differentialgetriebe vorgesehen mit einem ersten, wenigstens eine erste Zahnreihe aufweisenden Synchronsupport und mit einem dritten, wenigstens eine dritte Zahnreihe aufweisenden Synchronsupport und wenigstens einem ersten Diffenerentialritzel, das in die wenigstens eine erste und die wenigstens eine dritte Zahnreihe eingreift und die erste und dritte Zahnreihe miteinander koppelt, sowie ein zweites Differentialgetriebe mit einem zweiten, wenigstens eine zweite Zahnreihe aufweisenden Synchronsupport und mit einem vierten, wenigstens eine vierte Zahnreihe aufweisenden Synchronsupport und wenigstens einem zweiten Differentialritzel, das in die wenigstens eine zweite und die wenigstens eine vierte Zahnreihe eingreift und die zweite und vierte Zahnreihe miteinander koppelt.

Bei dieser Ausführungsform der Erfindung sind die beiden Differentialgetriebe exakt und hochpräzise fertigbar, indem die beiden Differentialritzel und die beiden Zahnreihen entlang der jeweiligen Synchronsupporte beispielsweise mittels Drahterodierverfahren oder ähnlichen Fertigungsverfahren gefertigt werden.

In einer weiteren Ausführungsform der Erfindung umfasst die wenigstens eine erste Zahnreihe zwei sich gegenüberliegende erste Zahnreihenabschnitte, zwischen denen zwei erste Gruppen erster Ritzel angeordnet sind und zwischen den beiden ersten Gruppen erster Differentialritzel zwei sich gegenüberliegende dritte Zahnreihenabschnitte angeordnet sind, wobei jede der Gruppen erster Differentialritzel in jeweils einen ersten und einen zweiten Zahnreihenabschnitt eingreift und die wenigstens eine zweite Zahnreihe zwei sich gegenüberliegende zweite Zahnreihenabschnitte umfasst, zwischen denen zwei zweite Gruppen zweiter Differentialritzel angeordnet sind, und zwischen den beiden zweiten Gruppen zweiter Differentialritzel sind zwei sich gegenüberliegende vierte Zahnreihenabschnitte angeordnet, und jede der Gruppen zweiter Differentialritzel greift in jeweils einen zweiten und einen vierten Zahnreihenabschnitt ein.

Vorzugsweise sind hier die Zahnreihen in jeweils zwei sich gegenüberliegende oder nebeneinander verlaufende Zahnreihenabschnitte aufgeteilt, wodurch eine erhöhte Führungsstabilität erreicht wird.

Günstigerweise ist ein erstes Synchrongetriebe vorgesehen, das wenigstens eine fünfte Zahnreihe am ersten Synchronsupport mit zwei nebeneinanderliegenden fünften Zahnreihenabschnitten aufweist und wenigstens eine sechste Zahnreihe am zweiten Synchronsupport mit zwei sechsten Zahnreihenabschnitten aufweist, und zwischen den beiden fünften und den beiden sechsten Zahnreihenabschnitten ist jeweils ein erstes Synchronritzel angeordnet, das die beiden fünften und sechsten Zahnreihenabschnitte miteinander koppelt, sowie ein zweites Synchrongetriebe, das wenigstens eine siebente Zahnreihe am dritten Synchronsupport aufweist und wenigstens eine achte Zahnreihe am vierten Synchronsupport aufweist, und zwischen den siebenten und achten Zahnreihen ist wenigstens ein zweites Synchronritzel angeordnet, das die siebente und achte Zahnreihe miteinander koppelt.

Auch die Synchronsupporte weisen daher vorzugsweise Zahnreihen mit zwei Zahnreihenabschnitten auf, um auch hier eine erhöhte Führungsstabilität zu ermöglichen.

Darüber hinaus sind sowohl für das Synchrongetriebe als auch für das Differentialgetriebe jeweils mehrere Synchron- bzw. Differentialritzel vorgesehen, um auch dadurch eine erhöhte und stabilere Führung zu ermöglichen.

In einer bevorzugten Weiterbildung der Erfindung sind die ersten Differentialritzel bzw. zweiten Differentialritzel auf einem ersten bzw. zweiten Differentialsupport drehbar gelagert, und der erste und zweite Differentialsupport sind mit Trägerplatten des Zentrischspanners jeweils positionsfest verbunden. Die beiden Trägerplatten des Zentrischspanners sind gegeneinander entlang der Breitenrichtung aufeinander zu und voneinander weg exakt symmetrisch verfahrbar.

Vorzugsweise ist die eine Spannbacke der ersten Aufnahme positionsfest mit dem ersten Synchronsupport und die zweite Spannbacke der ersten Aufnahme mit dem zweiten Synchronsupport und die erste Spannbacke der zweiten Aufnahme mit dem dritten Synchronsupport und die zweite Spannbacke der zweiten Aufnahme mit dem vierten Synchronsupport positionsfest verbunden.

Durch diese Ausführungsform ist eine sehr wartungsarme Ausführungsform eines Synchrondifferentialspanners mit zwei Aufnahmen zur Verfügung gestellt, die das gleichzeitige feste Einspannen zweier Langprofilabschnitte, vorzugsweise Rohre, ermöglichen und gleichzeitig die Relativposition der Mittelachsen der beiden Langprofilabschnitte zueinander wie auch die Position der beiden Langprofilmittelachsen im absoluten Raum konstant lassen, unabhängig davon, wie groß der Außendurchmesser einer oder jeder der beiden Langprofilabschnitte während des jeweiligen Spannvorganges und zwischen den verschiedenen Spannvorgängen verschiedener Arbeitstakte ist

Hinsichtlich des Verfahrens wird die Aufgabe durch ein Verfahren mit den Merkmalen des Anspruchs 8 gelöst.

Das erfindungsgemäße Verfahren zum gleichzeitigen Einspannen von zwei Langprofilabschnitten mit einem Twinspanner nach einer der oben genannten Ausführungsformen ermöglicht es, dass die beiden Langprofilabschnitte fest eingespannt werden und sich dabei die Mittelachsen der eingespannten Langprofilabschnitte unabhängig von der Größe der Außendurchmesser der Langprofilabschnitte positionieren.

Dadurch wird gegenüber dem Stand der Technik eine deutliche Verbesserung erzielt, weil durch die gleichbleibende Anordnung der Langprofilabschnitte im Twinspanner in verschiedenen Arbeitstakten die weiteren Bearbeitungsschritte der Enden der Langprofilabschnitte deutlich vereinfacht werden, denn die zur Bearbeitung der Enden der Langprofilabschnitte verwendeten Werkzeugköpfe brauchen in ihrer relativen Lage zu den Enden nicht bei jedem Arbeitstakt neu justiert zu werden.

Erfindungsgemäß wird ein erster Langprofilabschnitt mit einem größeren Durchmesser als der des zweiten Langprofilabschnitts mit der ersten Aufnahme und der zweite Langprofilabschnitt mit der zweiten Aufnahme fest gespannt, und der Zentrischspanner wird geschlossen, und dadurch werden die erste und die zweite Aufnahme geschlossen, bis der erste Langprofilabschnitt drehfest in der ersten Aufnahme liegt, und durch weiteres Schließen des Zentrischspanners werden die beiden Differentialgetriebe aktiviert, und die zweite Aufnahme wird geschlossen, und die Bewegung der beiden zweiten Spannbacken der zweiten Aufnahme werden durch das wenigstens eine Synchrongetriebe synchronisiert.

Die Erfindung wird anhand eines Ausführungsbeispiels in sechs Figuren beschrieben. Dabei zeigen:
- Fig. 1: ein Ersatzschaltbild des erfindungsgemäßen Synchrondifferentialspanners,
- Fig. 2: eine Explosionsdarstellung des erfindungsgemäßen Synchrondifferentialspanners,
- Fig. 3: eine perspektivische Ansicht des zusammengebauten Synchrondifferentialspanners,
- Fig. 4: eine Frontansicht des Synchrondifferentialspanners mit zwei eingespannten Rohren gleichen Außendurchmessers,
- Fig. 5: eine Frontansicht des Synchrondifferentialspanner in Fig. 4 mit einem im Durchmesser kleineren ersten Rohr und einem größeren zweiten Rohr,
- Fig. 6: eine Frontansicht des Synchrondifferentialspanner in Fig. 4 mit eingespanntem im Durchmesser größerem ersten Rohr und kleinerem zweiten Rohr.

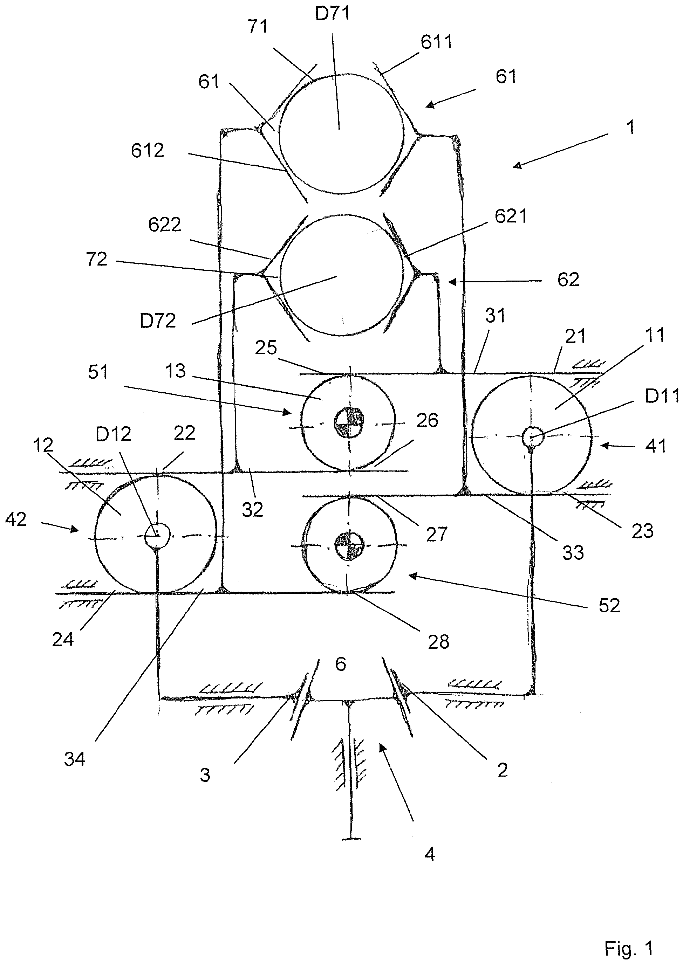

Das in Fig. 1 dargestellte schematische Ersatzschaltbild des Aufbaus des Synchrondifferentialspanners 1 der nachfolgenden Figuren soll zur Erläuterung der Funktionsweise dienen. Der Synchrondifferentialspanner 1 ist auf einem Zentrischspanner 4 aufgesetzt, der durch Verfahren eines Keils 6 zwei Trägerplatten 2, 3 exakt symmetrisch in Bezug auf eine räumliche Symmetrieachse S auseinander und aufeinander zu verfährt. Die erste Trägerplatte 2 ist mit einem ersten Differentialgetriebe 41 verbunden, und die zweite Trägerplatte 3 ist mit einem zweiten Differentialgetriebe 42 verbunden. Das erste Differentialgetriebe 41 weist ein erstes Differentialritzel 11 und das zweite Differentialgetriebe 42 ein zweites Differentialritzel 12 auf. Das erste Differentialritzel 11 steht mit einer ersten 21 und einer dritten Zahnreihe 23 im Eingriff, während das zweite Diefferentialritzel 12 mit einer zweiten 22 und vierten Zahnreihe 24 im Eingriff steht. Die erste Trägerplatte 2 ist mit einer Drehachse D11 des ersten Differentialritzels 11 auch unter Zug- und Druckbelastung positionsfest verbunden, während die zweite Trägerplatte 3 unter Zug- und Druckbelastung positionsfest mit einer Drehachse D12 des zweiten Differentialritzels 12 verbunden ist. Die erste und zweite Drehachse D11, D12 werden beispielsweise durch einen Dorn gebildet, auf den das jeweilige Differentialritzel 11, 12 drehbar aufgesetzt ist. Wenn die beiden Trägerplatten 2, 3 exakt symmetrisch aufeinander zu verfahren werden, werden somit das erste und zweite Differentialritzel 11, 12 ebenfalls exakt symmetrisch aufeinander zu verfahren; wenn die beiden Trägerplattten 2, 3 exakt symmetrisch voneinander weg verfahren werden, werden das erste und zweite Differentialritzel 11, 12 exakt symmetrisch voneinander weg verfahren. Dabei werden die erste und dritte Zahnreihe 21, 23 durch die Verfahrbewegung des ersten Differentialritzels 11 und die zweite und vierte Zahnreihe 22, 24 durch die Verfahrbewegung des zweiten Differentialritzels 12 ebenfalls und in gleichem Maße wie die zugehörigen Differentialritzel 11, 12 verfahren. Die relative Position der ersten 21 zur dritten Zahnreihe 23 bleibt zunächst während des Verfahrens des ersten Differentialritzels 11 beibehalten, und die relative Position der zweiten 22 zur vierten Zahnreihe 24 bleibt zunächst während des Verfahrens des zweiten Differentialritzels 12 ebenfalls beibehalten.

Die erste Zahnreihe 21 ist Teil eines ersten Synchronsupportes 31, an dem auch eine fünfte Zahnreihe 25 angeordnet ist. Die zweite Zahnreihe 22 ist Teil eines zweiten Synchronsupportes 32, an dem auch eine sechste Zahnreihe 26 angeordnet ist. Die dritte Zahnreihe 23 ist Teil eines dritten Synchronsupportes 33, an dem eine siebente Zahnreihe 27 angeordnet ist, und die vierte Zahnreihe 24 ist Teil eines vierten Synchronsupportes 34, an dem auch eine achte Zahnreihe 28 angeordnet ist. Die fünfte und sechste Zahnreihe 25, 26 sind zusammen mit einem ersten Synchronritzel 13 Bestandteil eines ersten Synchrongetriebes 51, während die siebente und achte Zahnreihe 27, 28 zusammen mit einem zweiten Synchronritzel 14 Bestandteil eines zweiten Synchrongetriebes 52 sind.

Vom ersten Synchronsupport 31 geht positionsfest ein Arm mit einer zweiten Spannbacke 621 einer zweiten Aufnahme 62 ab. Die zweite Spannbacke 621 der zweiten Aufnahme 62 ist auch unter Zug- und Druckbelastung positisonsfest mit dem ersten Synchronsupport 31 verbunden. Vom zweiten Synchronsupport 32 geht ein Arm mit einer anderen zweiten Spannbacke 622 der zweiten Aufnahme 62 ab, wobei die zweite Aufnahme 62 unter Zug- und Druckbelastung positionsfest mit dem zweiten Synchronsupport 32 verbunden ist. Darüber hinaus gehen vom dritten Synchronsupport 33 ein Arm und eine erste Spannbacke 611 einer ersten Aufnahme 61 ab und vom vierten Synchronsupport 34 ein Arm mit einer anderen ersten Spannbacke 612 der ersten Aufnahme 61, wobei die eine erste 611 und die andere erste Spannbacke 612 der ersten Aufnahme 61 ebenfalls jeweils positionsfest mit dem dritten und vierten Synchronsupport 33, 34 unter Zug- und Druckbelastung in Verbindung stehen.

Wenn durch den Zentrischspanner 4 angetrieben, das erste und zweite Diffenertialritzel 11, 12 aufeinander zu verfahren werden, wird entweder ein in der ersten Aufnahme 61 aufgenommenes erstes Rohr 71 oder zunächst ein in der zweiten Aufnahme 62 aufgenommenes zweites Rohr 72 fest eingeklemmt. Die zwei Rohre 71, 72 sind im Durchmesser genau genommen niemals exakt identisch, so dass stets eines der beiden Rohre 71, 72 zunächst eingeklemmt wird, während das im Durchmesser kleinere der beiden Rohre 71, 72 noch lose in der zugehörigen Aufnahme 61, 62 gelagert bleibt. Wenn das in der ersten Aufnahme 61 angeordnete erste Rohr 71 im Durchmesser größer ist als das in der zweiten Aufnahme 62 angeordnete zweite Rohr 72, wird das erste Rohr 71 beim Aufeinander-zu-Fahren des ersten und zweiten Differentialritzels 11, 12 des ersten und zweiten Differentialgetriebes 41, 42 zuerst eingespannt, und zwar derart, dass die Spannbacken 611, 612 der ersten Aufnahem 61 an einer Außenwandung des ersten Rohres 71 anliegen. Wenn das erste und zweite Differentialgetriebe 41, 42 dann noch weiter aufeinander zu verfahren werden, können der zweite und dritte Synchronsupport 32, 33 nicht weiter aufeinander zu verfahren werden, und das erste 11 und zweite Differentialritzel 12 fangen an sich zu drehen. In Fig. 1 dreht sich das erste Differentialritzel 11 entgegen dem Uhrzeigersinn, und das zweite Differentialritzel 12 dreht sich im Uhrzeigersinn. Dadurch werden der erste 21 und zweite Synchronsupport 22 bei lokal feststehendem dritten und vierten Support 23, 24 noch weiter aufeinander zu verfahren, bis das zweite Rohr 72 in der zweiten Aufnahme 62 eingespannt ist. Das erste Synchronritzel 13 synchronisiert die Bewegung der fünften und sechsten Zahnreihe 25, 26, also des ersten und zweiten Synchronsupportes 31, 32 exakt, so dass die eine zweite und die andere zweite Spannbacke 621, 622 der zweiten Aufnahme 62 ebenfalls exakt symmetrisch aufeinander zu verfahren werden, auch nachdem die beiden ersten Spannbacken 611, 612 der ersten Aufnahme 61 bereits fest an den Außenwandungen des ersten Rohres 71 anliegen.

Die entsprechend umgekehrte Funktionsweise ergibt sich, wenn das zweite Rohr 72 im Durchmesser größer ist als das erste Rohr 71. Die Bewegung der Spannbacken 611, 612, 621, 622 beider Aufnahmen 61, 62 ist daher aufgrund der beiden Differentialgetriebe 41, 42 und der beiden Synchrongetriebe 51, 52 exakt symmetrisch, und beide Mittelachsen D71, D72 der beiden eingespannten Rohre 71, 72 sind unabhängig vom Außenrohrdurchmesser im eingespannten Zustand immer exakt an derselben Lage gegenüber dem absoluten Raum, d. h. beispielsweise gegenüber den positionsfesten Teilen des Zentrischspanners 4.

Das heißt, unabhängig vom Außenrohrdurchmesser ist der Abstand der beiden Rohrmittelachsen D71, D72 im Twinspanner 1 stets gleich, und die Anordnung der beiden Rohrmittelachsen D71, D72 zur Umgebung, d. h. beispielsweise zum positionsfesten Gehäuse des Zentrischspanners 4, ist unabhängig vom Außenrohrdurchmesser im eingespannten Zustand auch stets gleich.

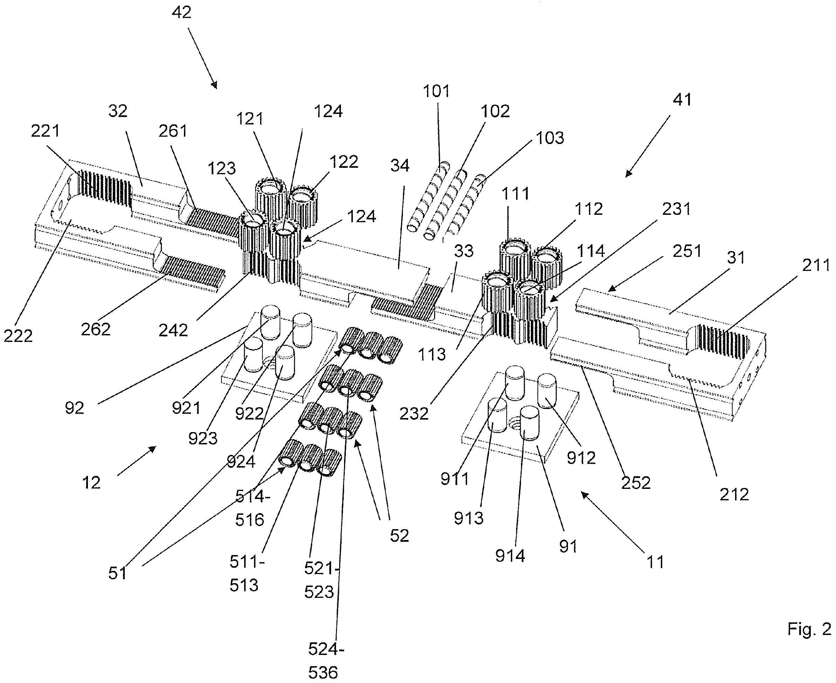

Fig. 2 zeigt den in Fig. 1 im Prinzipschaltbild dargestellten Aufbau in seiner realen Ausgestaltung. Das erste Differentialgetriebe 41 weist vier erste Differentialritzel 111, 112, 113, 114 und das zweite Differentialgetriebe 42 weist vier zweite Diefferentialritzel 121, 122, 123, 124 auf. Des Weiteren umfasst die erste Zahnreihe 21 des ersten Differentialgetriebes 41 zwei erste Zahnreihenabschnitte 211, 212, die sich parallel zueinander in einer ersten Aussparung 81 des ersten Synchronsupportes 31 gegenüberliegen. Darüber hinaus weist die dritte Zahnreihe 23 zwei dritte Zahnreihenabschnitte 231, 232 auf, wobei jeder der beiden Zahnreihenabschnitte 231, 232 nochmals in jeweils zwei Teile unterteilt ist. Das erste Differentialgetriebe 41 umfasst darüber hinaus einen Differentialsupport 91 mit vier getriebeseitig abstehenden ersten Dornen 911, 912, 913, 914, auf die jeweils eines der vier ersten Differentialritzel 111, 112, 113, 114 drehbar aufgesteckt ist. Die zwei ersten Differentialritzel 111, 112 greifen in den einen Zahnreihenabschnitt 211 der ersten Zahnreihe 21 und den einen Zahnreihenabschnitt 231 der dritten Zahnreihe 23 ein, während die zwei ersten Differentialritzel 113, 114 in den anderen Zahnreihenabschnitt 212 der ersten Zahnreihe 21 und den anderen Zahnreihenabschnitt 232 der dritten Zahnreihe 23 eingreifen.

Der entsprechende Aufbau gilt für das zweite Differentialgetriebe 42. Dieses umfasst einen zweiten Differentialsupport 92, von dem getriebeseitig vier zweite Dornen 921, 922, 923, 924 abstehen, auf die jeweils ein zweites Differentialritzel 121, 122, 123, 124 drehbar gesteckt ist. Die zweite Zahnreihe 22 ist in zwei zweite Zahnreihenabschnitte 221, 222 unterteilt, die sich in einer Aussparung 82 des zweiten Synchronsupportes 32 fluchtend einander gegenüberliegen. Die vierte Zahnreihe 24 ist in zwei vierte Zahnreihenabschnitte 241, 242 unterteilt, die jeweils wiederum zweigeteilt sind, wobei jeder der vier Teile mit einem der vier zweiten Differentialritzel 121, 122, 123, 124 in Wirkverbindung steht. Zwei der vier zweiten Differentialritzel 121,122 greifen jeweils in den einen Zahnreihenabschnitt 221 der zweiten Zahnreihe 22 und den einen Zahnreihenabschnitt 241 der vierten Zahnreihe 24 ein. Zwei andere der vier zweiten Differentialritzel 123, 124 greifen jeweils in den anderen Zahnreihenabschnitt 222 der zweiten Zahnreihe 22 und den anderen Zahnreihenabschnitt 242 der vierten Zahnreihe 24 ein.

Der erste Differentialsupport 91 ist auf der ersten Trägerplatte 2 des Zentrischspanners 4 positionsfest montiert, der zweite Differentialsupport 92 ist auf der zweiten Trägerplatte 3 des Zentrischspanners 4 positionsfest montiert. Beim Aufeinander-zu-Fahren, also dem Schließen des Zentrischspanners 4, werden das erste und zweite Differentialgetriebe 41, 42 aufeinander zubewegt, wodurch sich zumindest zunächst auch der zweite und vierte Synchronsupport 32, 34 zusammen nach innen bewegen und sich der erste und dritte Synchronsupport 31, 33 ebenfalls nach innen bewegen. Entsprechendes gilt für das Voneinander-weg-Fahren. Die Bewegung des ersten und dritten Synchronsupportes 31, 33 ist symmetrisch zur Bewegung des zweiten und vierten Synchronsupportes 32, 34. Die vier Synchronsupporte 31, 32, 33, 34 sind über zwei Synchrongetriebe 51, 52 miteinander gekoppelt. Der erste Synchronsupport 31 weist die fünfte Zahnreihe 25 auf, die zwei fünfte Zahnreihenabschnitte 251, 252 umfasst, die parallel nebeneinander am ersten Synchronsupport 31 angeordnet sind, wobei die Zähne der beiden fünften Zahnreihenabschnitte 251, 252 in dieselbe Richtung weisen.

Der zweite Synchronsupport 52 weist die sechste Zahnreihe 26 auf, die ebenfalls aus zwei sechsten Zahnreihenabschnitten 261, 262 gebildet ist, wobei die beiden sechsten Zahnreihenabschnitte 261, 262 ebenfalls in die gleiche Richtung weisen und parallel nebeneinander angeordnet sind. Die fünfte und die sechste Zahnreihe 25, 26 werden beim zusammengebauten Synchrondifferentialspanner 1 übereinanderverfahren, so dass sich die fünfte Zahnreihe 25 und die sechste Zahnreihe 26 gegenüberliegen. Zwischen der fünften und sechsten Zahnreihe 25, 26 sind in jedem übereinanderliegenden Paar von Zahnreihenabschnitten 251, 261 bzw 252, 262 jeweils drei erste Synchronritzel 511, 512, 513 und 514, 515, 516 vorgesehen, die in die einen Zahnreihenabschnitte 251, 261 bzw. die anderen Zahnreihenabschnitte 252, 262 eingreifen. Die sechs ersten Synchronritzel 511, 512, 513, 514, 515, 516 der fünften und sechsten Zahnreihe 25, 26 sind drehbar auf drei Wellen 101, 102, 103 gelagert.

Am vierten Sychronsupport 34 ist auch die achte Zahnreihe 28 angeordnet, und am dritten Synchronsupport 33 ist die siebente Zahnreihe 27 angeordnet. Die siebente und achte Zahnreihe 27, 28 liegen sich beim zusammengebauten Synchrondifferentialspanners 1 ebenfalls, mit den Zähnen einander zuweisend, gegenüber. Zwischen der siebenten und achten Zahnreihe 27, 28 sind sechs zweite Synchronritzel 521, 522, 523, 524, 525, 526 des zweiten Synchrongetriebes 52 vorgesehen, die auf denselben drei Wellen 101, 102 103 gelagert sind wie die beiden Dreigruppen erster Synchronritzel 511, 512, 513 bzw. 514, 515, 516 des ersten Synchrongetriebes 51.

Die Funktionsweise des Synchrondifferentialspanners 1 in Fig. 2 entspricht dem in Fig. 1 mit entsprechenden Ersetzungen. Zum Verständnis seiner Funktionsweise wird auf die Fig. 1 verwiesen. Dabei wird das eine erste Differentialritzel 11 durch die vier ersten Differentialritzel 111, 112, 113, 114 ersetzt. Das eine zweite Differentialritzel 12 wird durch die vier zweiten Differentialritzel 121, 122, 123, 124 und das erste Synchronritzel 13 durch die sechs ersten Synchronritzel 511, 512, 513, 514, 515, 516 und das zweite Synchronritzel 14 durch die sechs zweiten Synchronritzel 521, 522, 523, 524, 525, 526 ersetzt.

In Fig. 2 ist am zweiten Synchronsupport 32 die zweite Spannbacke 621 der zweiten Aufnahme 62 positionsfest zu ihr angeordnet, und am ersten Synchronsupport 31 ist die andere zweite Spannbacke 622 der zweiten Aufnahme 62 positionsfest zu ihr angeordnet, am dritten Synchronsupport 33 ist die erste Spannbacke 611 der ersten Aufnahme 61 positionsfest zu ihr angeordnet, und am vierten Synchronsupport 34 ist die andere erste Spannbacke 612 der ersten Aufnahme 61 relativ positionsfest zu ihr angeordnet. Die erste und zweite Aufnahme 61, 62 sind aus Übersichtlichkeitsgründen in der Fig. 2 jedoch nicht eingezeichnet.

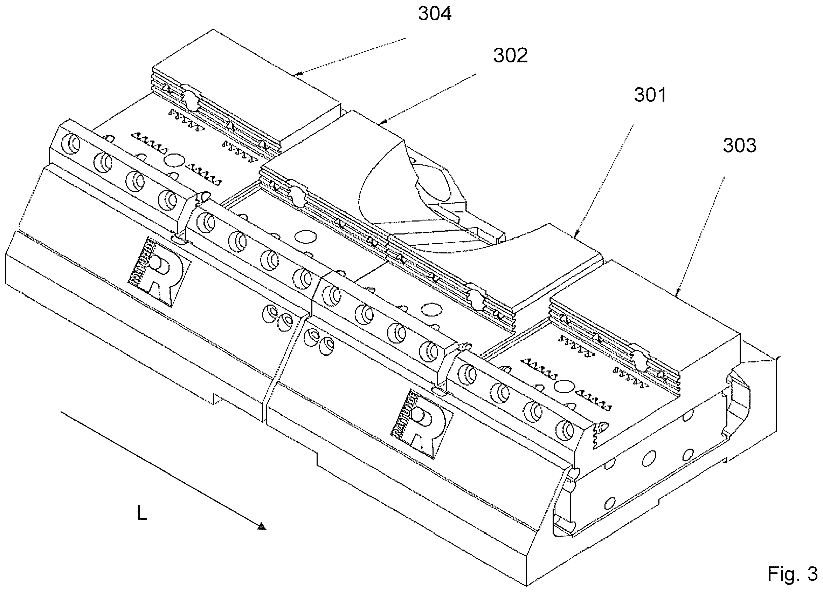

Fig. 3 zeigt den Synchrondifferentialspanner 1 der Fig. 2 in einer zusammengebauten Version. Auf dem ersten Synchronsupport 31 ist eine erste Montageplatte 301 für die Befestigung der zweiten Spannbacke 621 der zweiten Aufnahme 62, auf dem zweiten Synchronsupport 32 ist eine zweite Montageplatte 302 zur Befestigung der anderen zweiten Spannbacke 622 der zweiten Aufnahme 62 und am dritten Synchronsupport 33 ist eine dritte Montageplatte 303 zur Befestigung der ersten Spannbacke 611 der ersten Aufnahme 61 und am vierten Synchronsupport 34 eine vierte Montageplatte 304 zur Befestigung der anderen ersten Spannbacke 612 der ersten Aufnahme 61 vorgesehen. Die vier Montageplatten 301, 302, 303 304 sind in Längsrichtung L, wie oben beschrieben, entsprechend den ihnen zugeordneten Synchronsupporten 31, 32, 33, 34 gekoppelt hin und her verfahrbar.

Die erste und zweite Montageplatte 301, 302 sind exakt symmetrisch in Längsrichtung L aufeinander zu und voneinander weg verfahrbar, und die dritte und vierte Montageplatte 303, 304 sind ebenfalls exakt symmetrisch aufeinander zu und voneinander weg in Längsrichtung L verfahrbar.

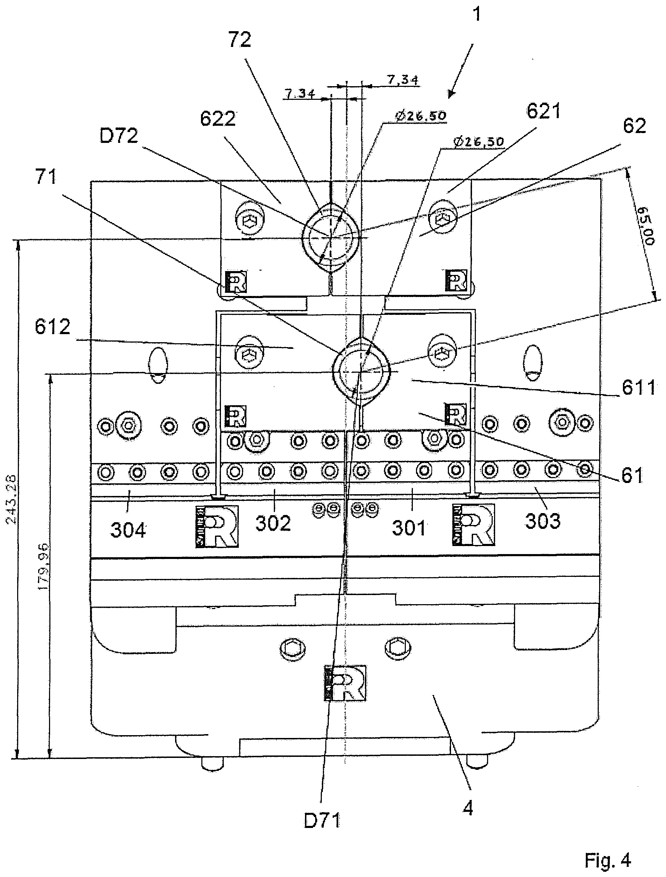

Fig. 4 zeigt den Synchrondifferentialspanner 1 der Fig. 3, aufgesetzt auf den Zentrischspanner 4. Von jeder der Montageplatten 301, 302, 303, 304 geht jeweils ein Arm mit einer Spannbacke 611, 612, 621, 622 der jeweiligen Aufnahme 61, 62 ab. Fig. 4 zeigt zwei eingespannte Rohre 71, 72 mit einem identischen Außendurchmesser. Das erste Rohr 71 weist einen Außendurchmesser von 26,5 mm, das zweite Rohr 72 weist einen Außendurchmesser von ebenfalls 26,5 mm auf. Der Abstand der beiden Rohrmittelachsen D71, D72 beträgt 65 mm, während der kürzeste Abstand der Rohrmittelachsen D71, D72 von einer räumlichen Symmetrieachse S, die der Symmetrieachse des Zentrischspanners 4 entspricht, jeweils 7,34 mm beträgt. Das erste Rohre 71 ist in der ersten Aufnahme 61 und das zweite Rohr 72 ist gleichzeitig in der zweiten Aufnahme 62 fest eingespannt.

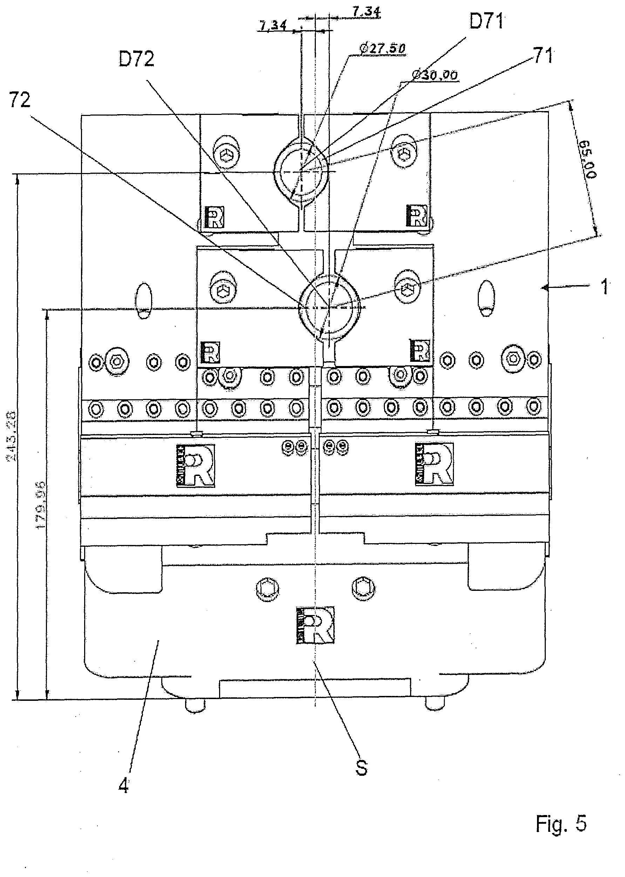

Fig. 5 zeigt den Synchrondifferentialspanner 1 mit einem ersten Rohr 71 größeren Außendurchmessers von 30 mm und einem zweiten Rohr 72 kleineren Außendurchmessers von 27,5 mm. Erfindungswesentlich ist, dass der Abstand der beiden Rohrmittelachsen D71, D72, wie im Fall der Anordnung in Fig. 4, exakt 65 mm beträgt, und der Abstand der Rohrmittelachse D71 des ersten Rohres 71 von der räumlichen Symmetrieachse S weiterhin 7,34 mm beträgt und der Abstand der Rohrmittelachse D72 des zweiten Rohres 72 von der räumlichen Symmetrieachse S, ebenfalls wie in Fig. 4, 7,34 mm beträgt. Das heißt, trotz gegenüber Fig. 4 geänderten Rohraußendurchmessern beider Rohre 71, 72, sind die Mittelachsen D71, D72 der beiden Rohre 71, 72, gegenüber dem Zentrischspanner 4 gesehen, unabhängig vom Rohraußendurchmesser im eingespannten Zustand beider Rohre 71, 72 exakt gleich positioniert.

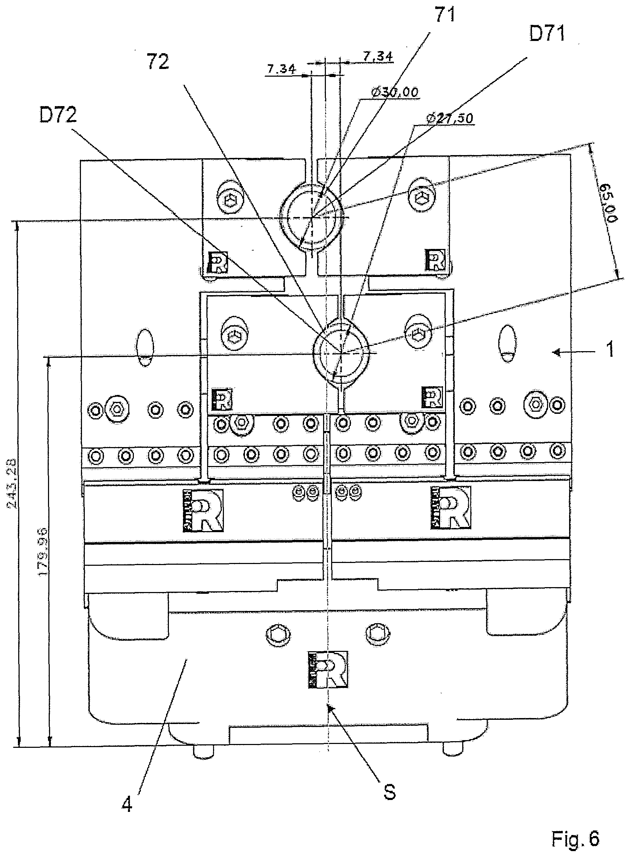

Fig. 6 zeigt die entsprechende Anordnung des Synchrondifferentialspanner 1 bei einem ersten kleineren Rohraußendurchmesser von 27,5 mm und einem zweiten größeren Rohrdurchmesser von 30 mm. Auch hier bleibt der Abstand der beiden Rohrmittelachsen D71, D72 weiterhin genauso groß wie bei eingespannten Rohren 71, 72 eines beliebigen anderen Durchmessers, nämlich hier von 65 mm. Der Abstand der beiden Rohrmittelachsen D71, D72 von der räumlichen Symmetrieachse S bleibt unabhängig vom Rohrdurchmesser nach wie vor konstant und beträgt in diesem Beispiel 7,34 mm.

Der erfindungsgemäße Synchrondifferentialspanner 1 ermöglicht es somit, gleichzeitig zwei Rohre 71, 72 festzuspannen und dabei die Rohrmittelachsen D71, D72 im Raum unabhängig vom Rohraußendurchmesser konstant zu halten, so dass die Rohrenden der beiden Rohre 71, 72 mittels jeweils eines Werkzeugkopfes, beispielsweise eines Anfaskopfes, bearbeitet werden können, ohne dass die relative Lage von Werkzeugkopf und eingespanntem Rohr für jeden Bearbeitungstakt neu justiert werden müsste.

### Bezugszeichenliste

- 1: Synchrondifferentialspanner / Twinspanner
- 2: Trägerplatte
- 3: Trägerplatte
- 4: Zentrischspanner

- 6: Keil

- 11: erstes Differentialritzel
- 12: zweites Differentialritzel
- 13: erstes Synchronritzel
- 14: zweites Synchronritzel

- 21: erste Zahnreihe
- 22: zweite Zahnreihe
- 23: dritte Zahnreihe
- 24: vierte Zahnreihe
- 25: fünfte Zahnreihe
- 26: sechste Zahnreihe
- 27: siebente Zahnreihe
- 28: achte Zahnreihe

- 31: erster Synchronsupport
- 32: zweiter Synchronsupport
- 33: dritter Synchronsupport
- 34: vierter Synchronsupport

- 41: erstes Differentialgetriebe
- 42: zweites Differentialgetriebe

- 51: erstes Synchrongetriebe
- 52: zweites Synchrongetriebe

- 61: erste Aufnahme
- 62: zweite Aufnahme

- 71: erstes Rohr
- 72: zweites Rohr

- 81: Aussparung
- 82: Aussparung

- 91: erster Differentialsupport
- 92: zweiter Differentialsupport

- 101: Welle
- 102: Welle
- 103: Welle

- 111: erstes Differentialritzel

- 112: erstes Differentialritzel
- 113: erstes Differentialritzel
- 114: erstes Differentialritzel

- 121: zweites Differentialritzel
- 122: zweites Differentialritzel
- 123: zweites Differentialritzel
- 124: zweites Differentialritzel

- 211: ein erster Zahnreihenabschnitt
- 213: anderer erster Zahnreihenabschnitt

- 221: ein zweiter Zahnreihenabschnitt
- 222: anderer zweiter Zahnreihenabschnitt

- 231: ein dritter Zahnreihenabschnitt
- 232: anderer dritter Zahnreihenabschnitt

- 241: ein vierter Zahnreihenabschnitt
- 242: anderer vierter Zahnreihenabschnitt

- 251: ein fünfter Zahnreihenabschnitt
- 252: anderer fünfter Zahnreihenabschnitt

- 261: ein sechster Zahnreihenabschnitt
- 262: anderer sechster Zahnreihenabschnitt

- 301: erste Montageplatte
- 302: zweite Montageplatte
- 303: dritte Montageplatte
- 304: vierte Montageplatte

- 511: erstes Synchronritzel
- 512: erstes Synchronritzel
- 513: erstes Synchronritzel
- 514: erstes Synchronritzel
- 515: erstes Synchronritzel
- 516: erstes Synchronritzel

- 521: viertes Synchronritzel
- 522: viertes Synchronritzel
- 523: viertes Synchronritzel
- 524: viertes Synchronritzel
- 525: viertes Synchronritzel
- 526: viertes Synchronritzel

- 611: eine erste Spannbacke
- 612: andere erste Spannbacke

- 621: eine zweite Spannbacke
- 622: andere zweite Spannbacke

- 911: erster Dorn
- 912: erster Dorn
- 913: erster Dorn
- 914: erster Dorn

- 921: zweiter Dorn
- 922: zweiter Dorn
- 923: zweiter Dorn
- 924: zweiter Dorn

- D11: Drehachse
- D12: Drehachse

- D71: Rohrmittelachse
- D72: Rohrmittelachse

- L: Längsrichtung
- S: räumliche Symmetrieachse

## Patentansprüche

1. Twinspanner mit
zwei jeweils zwei verfahrbare Spannbacken (611, 612, 621, 622) aufweisenden Aufnahmen (61, 62), mit denen jeweils ein im Querschnitt kreisförmiger Langprofilabschnitt (71, 72) mit jeweils einer Mittelachse (D71, D72) und einem Außendurchmesser im Kontaktabschnitt einspannbar ist,
wobei zwei Spannbacken (611, 612, 621, 622) verschiedener Aufnahmen (61, 62) über jeweils ein Differentialgetriebe (41, 42) miteinander gekoppelt sind und zwei Spannbacken (611, 612, 621, 622) derselben Aufnahme (61, 62) über ein Synchrongetriebe (51, 52) miteinander gekoppelt sind und die Lage der Mittelachsen (D71, D72) der eingespannten Langprofilabschnitte (71 72) unabhängig von der Größe der Außendurchmesser der Langprofilabschnitte (71, 72) ist,
**gekennzeichnet durch** einen Zentrischspanner (4) für die beiden Differentialgetriebe (41, 42), mit dem die beiden Differentialgetriebe (41, 42) relativ zueinander verfahrbar sind.

2. Twinspanner nach Anspruch 1,
**dadurch gekennzeichnet, dass** die erste Spannbacke (611) der ersten Aufnahme (61) und die zweite Spannbacke (621) der zweiten Aufnahme (62) über das erste Differentialgetriebe (41) und die andere erste Spannbacke (612) der ersten Aufnahme (61) und die andere zweite Spannbacke (622) der zweiten Aufnahme (62) über das zweite Differentialgetriebe (42) miteinander gekoppelt sind und die erste Spannbacke (611) und die andere erste Spannbacke (612) über ein erstes Synchrongetriebe (51) und die zweite Spannbacke (621) und die andere zweite Spannbacke (622) über ein zweites Synchrongetriebe (52) miteinander gekoppelt sind.

3. Twinspanner nach einem der Ansprüche 1 oder 2,
**gekennzeichnet durch** das erste Differentialgetriebe (41) mit einem ersten wenigstens eine erste Zahnreihe (21) aufweisenden Synchronsupport (31) und mit einem dritten wenigstens eine dritte Zahnreihe (23) aufweisenden Synchronsupport (33) und wenigstens einem ersten Differentialritzel (11), das in die wenigstens eine erste (21) und die wenigstens eine dritte Zahnreihe (23) eingreift und die erste (21) und dritte Zahnreihe (23) miteinander koppelt, und
durch das zweite Differentialgetriebe (42) mit einem zweiten wenigstens eine zweite Zahnreihe (22) aufweisenden Synchronsupport (32) und mit einem vierten wenigstens eine vierte Zahnreihe (24) aufweisenden Synchronsupport (34) und wenigstens einem zweiten Differentialritzel (12), das in die wenigstens eine zweite und die wenigstens eine vierte Zahnreihe (24) eingreift und die zweite (22) und vierte Zahnreihe (24) miteinander koppelt.

4. Twinspanner nach Anspruch 3,
**dadurch gekennzeichnet, dass** die wenigstens eine erste Zahnreihe (21) zwei sich gegenüberliegende erste Zahnreihenabschnitte (211, 212) umfasst, zwischen denen zwei erste Gruppen erster Differentialritzel (111 - 114) angeordnet sind und dadurch, dass zwischen den beiden ersten Gruppen erster Differentialritzel (111-114) zwei sich gegenüberliegende dritte Zahnreihenabschnitte (231, 232) angeordnet sind und jede der Gruppen erster Differentialritzel (111-114) in jeweils einen ersten (211) und einen dritten Zahnreihenabschnitt (213) eingreift und
die wenigstens eine zweite Zahnreihe (22) zwei sich gegenüberliegende zweite Zahnreihenabschnitte (221, 222) umfasst, zwischen denen zwei zweite Gruppen zweiter Differentialritzel (511-514) angeordnet sind und dadurch, dass zwischen den beiden zweiten Gruppen zweiter Differentialritzel (511-514) zwei sich gegenüberliegende vierte Zahnreihenabschnitte (241, 242) angeordnet sind und jede der Gruppen zweiter Differentialritzel (511-514) in jeweils einen zweiten (221) und einen vierten Zahnreihenabschnitt (241) eingreift.

5. Twinspanner nach einem der Ansprüche 1 bis 4,
**gekennzeichnet durch** das erste Synchrongetriebe (51), das wenigstens eine fünfte Zahnreihe (25) am ersten Synchronsupport (31) mit zwei nebeneinanderliegenden fünften Zahnreihenabschnitten (251, 252) aufweist und wenigstens eine sechste Zahnreihe (26) am zweiten Synchronsupport (32) mit zwei sechsten Zahnreihenabschnitten (261, 262) aufweist und **dadurch, dass** zwischen den beiden fünften (251, 252) und den beiden sechsten Zahnreihenabschnitten (261, 262) jeweils wenigstens ein erstes Synchronritzel (511- 516) angeordnet ist, das die beiden fünften (251, 252) und sechsten Zahnreihenabschnitte (261, 262) miteinander koppelt, und das zweite Synchrongetriebe (52), das wenigstens eine siebente Zahnreihe (27) am dritten Synchronsupport (33) aufweist und wenigstens eine achte Zahnreihe (28) am vierten Synchronsupport (34) aufweist, wobei zwischen der siebenten (27) und der achten Zahnreihe (28) wenigstens ein zweites Synchronritzel (521-526) angeordnet ist, das die siebente (27) und achte Zahnreihe (28) miteinander koppelt.

6. Twinspanner nach Anspruch 5,
**gekennzeichnet durch** einen ersten (91) und einen zweiten Differentialsupport (92), auf dem die ersten Differentialritzel (111-114) bzw. zweiten Differentialritzel (121-124) drehbar gelagert sind und die mit Trägerplatten (301-304) des Zentrischspanners (4) positionsfest verbunden sind.

7. Twinspanner nach einem der Ansprüche 1 bis 6,
**dadurch gekennzeichnet, dass** die eine erste Spannbacke (611) der ersten Aufnahme (61) positionsfest mit dem dritten Synchronsupport (33) und die andere erste Spannbacke (612) der ersten Aufnahme (61) mit dem zweiten Synchronsupport (32) und die eine zweite Spannbacke (621) der zweiten Aufnahme (62) mit dem ersten Synchronsupport (31) und die andere zweite Spannbacke (622) der zweiten Aufnahme (62) mit dem vierten Synchronsupport (34) positionsfest verbunden sind.

8. Verfahren zum gleichzeitigen Einspannen von zwei Langprofilabschnitten (71, 72) mit einem Twinspanner (1) nach einem der vorstehenden Ansprüche, indem beide Langprofilabschnitte (72, 72) fest eingespannt werden und
sich dabei die Mittelachsen (D71, D72) der eingespannten Langprofilabschnitte (71 72) unabhängig von der Größe der Außendurchmesser der Langprofilabschnitte (71, 72) positionieren und indem ein erster Langprofilabschnitt (71) mit der ersten Aufnahme (61) und ein zweiter Langprofilabschnitt (72) mit der zweiten Aufnahme (62) gegriffen wird, wobei der erste Langprofilabschnitt (71) einen größeren Durchmesser als der des zweiten Langprofilabschnitts (72) aufweist,
der Zentrischspanner (4) geschlossen wird und dadurch die erste (61) und zweite Aufnahme (62) geschlossen werden, bis der erste Langprofilabschnitt (71) drehfest in der ersten Aufnahme (61) eingespannt wird,
danach durch weiteres Schließen des Zentrischspanners (4) die beiden Differentialgetriebe (41, 42) aktiviert werden und die zweite Aufnahme (62) geschlossen wird und dabei die Bewegung der beiden zweiten Spannbacken (621, 622) der zweiten Aufnahme (62) durch die beiden Synchrongetriebe (51, 52) synchronisiert wird.

## Claims

1. Twin clamp, comprising
two receptacles (61, 62), each of which has two movable clamping jaws (611, 612, 621, 622) and by means of each of which an elongate profile segment (71, 72) having a circular cross-section can be clamped in the contact section, each elongate profile segment having a centre axis (D71, D72) and an outside diameter,
wherein two clamping jaws (611, 612, 621, 622) of different receptacles (61, 62) are coupled to one another via a respective differential gearing (41, 42) and two clamping jaws (611, 612, 621, 622) of the same receptacle (61, 62) are coupled to one another via a synchronous gearing (51, 52) and the position of the centre axes (D71, D72) of the clamped elongate profile segments (71, 72) is independent of the size of the outside diameters of the elongate profile segments (71, 72) **characterized by** a centric clamp (4) for the two differential gearings (41, 42), by which the two differential gearings (41, 42) can be moved relative to one another.

2. Twin clamp according to claim 1,
**characterized in that** the first clamping jaw (611) of the first receptacle (61) and the second clamping jaw (621) of the second receptacle (62) are coupled to one another via the first differential gearing (41) and the other first clamping jaw (612) of the first receptacle (61) and the other second clamping jaw (622) of the second receptacle (62) are coupled to one another via the second differential gearing (42), and the first clamping jaw (611) and the other first clamping jaw (612) are coupled to one another via a first synchronous gearing (51) and the second clamping jaw (621) and the other second clamping jaw (622) are coupled to one another via a second synchronous gearing (52).

3. Twin clamp according to any one of claims 1 or 2,
**characterized by** the first differential gearing (41) comprising a first synchronous support (31) having at least one first tooth row (21) and comprising a third synchronous support (33) having at least one third tooth row (23), and at least one first differential pinion (11) which engages in the at least one first (21) and the at least one third tooth row (23) and couples the first (21) and third tooth row (23) to one another, and
by the second differential gearing (42) comprising a second synchronous support (32) having at least one second tooth row (22) and comprising a fourth synchronous support (34) having at least one fourth tooth row (24), and at least one second differential pinion (12) which engages in the at least one second and the at least one fourth tooth row (24) and couples the second (22) and fourth tooth row (24) to one another.

4. Twin clamp according to claim 3,
**characterized in that** the at least one first tooth row (21) comprises two first tooth row sections (211, 212) which are located opposite one another and between which two first groups of first differential pinions (111-114) are arranged, and **in that** two third tooth row sections (231, 232) which are located opposite one another are arranged between the two first groups of first differential pinions (111-114) and each of the groups of first differential pinions (111-114) engages in respectively one first (211) and one third tooth row section (213), and
the at least one second tooth row (22) comprises two second tooth row sections (221, 222) which are located opposite one another and between which two second groups of second differential pinions (511-514) are arranged, and **in that** two fourth tooth row sections (241, 242) which are located opposite one another are arranged between the two second groups of second differential pinions (511-514) and each of the groups of second differential pinions (511-514) engages in respectively one second (221) and one fourth tooth row section (241).

5. Twin clamp according to any one of claims 1 to 4,
**characterized by** the first synchronous gearing (51) which has at least one fifth tooth row (25) on the first synchronous support (31) with two fifth tooth row sections (251, 252) located next to one another and at least one sixth tooth row (26) on the second synchronous support (32) with two sixth tooth row sections (261, 262), and in that in each case there is arranged between the two fifth (251, 252) and the two sixth tooth row sections (261, 262) at least one first synchronous pinion (511-516) which couples the two fifth (251, 252) and sixth tooth row sections (261, 262) to one another, and the second synchronous gearing (52) which has at least one seventh tooth row (27) on the third synchronous support (33) and at least one eighth tooth row (28) on the fourth synchronous support (34), wherein there is arranged between the seventh (27) and the eighth tooth row (28) at least one second synchronous pinion (521-526) which couples the seventh (27) and eighth tooth row (28) to one another.

6. Twin clamp according to claim 5,
**characterized by** a first (91) and a second differential support (92), on which the first differential pinions (111-114) and respectively second differential pinions (121-124) are rotatably mounted and which are connected in a fixed position to carrier plates (301-304) of the centric clamp (4).

7. Twin clamp according to any one of claims 1 to 6,
**characterized in that** the one first clamping jaw (611) of the first receptacle (61) is connected in a fixed position to the third synchronous support (33) and the other first clamping jaw (612) of the first receptacle (61) is connected in a fixed position to the second synchronous support (32) and the one second clamping jaw (621) of the second receptacle (62) is connected in a fixed position to the first synchronous support (31) and the other second clamping jaw (622) of the second receptacle (62) is connected in a fixed position to the fourth synchronous support (34).

8. Method for simultaneously clamping two elongate profile segments (71, 72) with a twin clamp (1) according to any one of the preceding claims,
the two elongate profile segments (72, 72) being securely clamped, and
the centre axes (D71, D72) of the clamped elongate profile segments (71, 72) positioning themselves independently of the size of the outside diameters of the elongate profile segments (71, 72) and a first elongate profile segment (71) being gripped by the first receptacle (61) and a second elongate profile segment (72) being gripped by the second receptacle (62), wherein the first elongate profile segment (71) has a larger diameter than that of the second elongate profile segment (72),
the centric clamp (4) is closed and as a result the first (61) and second receptacle (62) are closed until the first elongate profile segment (71) is clamped in the first receptacle (61) in a manner secured against rotation,
then, by further closing of the centric clamp (4), the two different gearings (41, 42) are activated and the second receptacle (62) is closed and during this the movement of the two second clamping jaws (621, 622) of the second receptacle (62) is synchronized by the two synchronous gearings (51, 52).

## Revendications

1. Tendeur jumelé avec
deux logements (61, 62) qui présentent respectivement deux mâchoires de serrage déplaçables (611, 612, 621, 622) avec lesquels respectivement une section de profilé long (71, 72) de section circulaire peut être serrée dans la section de contact avec respectivement un axe médian (D71, D72) et un diamètre extérieur,
deux mâchoires de serrage (611, 612, 621, 622) de différents logements (61, 62) étant couplées l'une à l'autre par respectivement un différentiel (41, 42) et deux mâchoires de serrage (611, 612, 621, 622) du même logement (61, 62) étant couplées l'une à l'autre par un engrenage synchrone (51, 52) et la position des axes médians (D71, D72) des sections de profilé long serrées (71 72) étant indépendante de la grandeur des diamètres extérieurs des sections de profilés longs (71, 72), **caractérisé par** un tendeur centré (4) pour les deux différentiels (41, 42) avec lequel les deux différentiels (41, 42) peuvent être déplacés l'un par rapport à l'autre.

2. Tendeur jumelé selon la revendication 1, **caractérisé en ce que** la première mâchoire de serrage (611) du premier logement (61) et la seconde mâchoire de serrage (621) du second logement (62) sont couplées l'une avec l'autre par le premier différentiel (41) et l'autre première mâchoire de serrage (612) du premier logement (61) et l'autre seconde mâchoire de serrage (622) du second logement (62) sont couplées l'une avec l'autre par le second différentiel (42) et la première mâchoire de serrage (611) et l'autre première mâchoire de serrage (612) sont couplées l'une avec l'autre par un premier engrenage synchrone (51) et la seconde mâchoire de serrage (621) et l'autre seconde mâchoire de serrage (622) sont couplées l'une avec l'autre par un second engrenage synchrone (52).

3. Tendeur jumelé selon l'une des revendications 1 ou 2, **caractérisé par** le premier différentiel (41) avec un premier support synchrone (31) qui présente au moins une première rangée de dents (21) et avec un troisième support synchrone (33) qui présente au moins une troisième rangée de dents (23) et au moins un premier pignon différentiel (11) qui s'engrène dans la première rangée de dents qui existe au moins (21) et la troisième rangée de dents qui existe au moins (23) et qui couple la première rangée de dents (21) et la troisième rangée de dents (23) l'une avec l'autre, et par le second différentiel (42) avec un second support synchrone (32) qui présente au moins une seconde rangée de dents (22) et avec un quatrième support synchrone (34) qui présente au moins une quatrième rangée de dents (24) et au moins un second pignon différentiel (12) qui s'engrène dans la seconde rangée de dents qui existe au moins et la quatrième rangée de dents qui existe au moins (24) et qui couple la seconde rangée de dents (22) et la quatrième rangée de dents (24) l'une avec l'autre.

4. Tendeur jumelé selon la revendication 3, **caractérisé en ce que** la première rangée de dents qui existe au moins (21) comprend deux premières sections de rangée de dents en face l'une de l'autre (211, 212) entre lesquelles deux premiers groupes de premiers pignons différentiels (111 - 114) sont placés et **en ce que** deux troisièmes sections de rangée de dents en face l'une de l'autre (231, 232) sont placées entre les deux premiers groupes de premiers pignons différentiels (111-114) et chacun des groupes de premiers pignons différentiels (111-114) s'engrène dans respectivement une première section de rangée de dents (211) et une troisième section de rangée de dents (213) et la seconde rangée de dents qui existe au moins (22) comprend deux secondes sections de rangée de dents en face l'une de l'autre (221, 222) entre lesquelles deux seconds groupes de seconds pignons différentiels (511-514) sont placés et **en ce que** deux quatrièmes sections de rangée de dents en face l'une de l'autre (241, 242) sont placées entre les deux seconds groupes de seconds pignons différentiels (511-514) et chacun des groupes de seconds pignons différentiels (511-514) s'engrène dans respectivement une seconde section de rangée de dents (221) et une quatrième section de rangée de dents (241).

5. Tendeur jumelé selon l'une des revendications 1 à 4, **caractérisé par** le premier engrenage synchrone (51) qui présente au moins une cinquième rangée de dents (25) sur le premier support synchrone (31) avec deux cinquièmes sections de rangée de dents situées l'une à côté de l'autre (251, 252) et au moins une sixième rangée de dents (26) sur le second support synchrone (32) avec deux sixièmes sections de rangée de dents (261, 262) et en ce que respectivement au moins un premier pignon synchrone (511-516) est placé entre les deux cinquièmes sections de rangée de dents (251, 252) et les deux sixièmes sections de rangée de dents (261, 262), pignon synchrone qui couple les deux cinquièmes sections de rangée de dents (251, 252) et les deux sixièmes sections de rangée de dents (261, 262) l'une avec l'autre et le second engrenage synchrone (52) qui présente au moins une septième rangée de dents (27) sur le troisième support synchrone (33) et qui présente au moins une huitième rangée de dents (28) sur le quatrième support synchrone (34), cependant qu'au moins un second pignon synchrone (521-526) qui couple la septième rangée de dents (27) et la huitième rangée de dents (28) l'une avec l'autre est placé entre la septième rangée de dents (27) et la huitième rangée de dents (28).

6. Tendeur jumelé selon la revendication 5, **caractérisé par** un premier support différentiel (91) et un second support différentiel (92) sur lequel les premiers pignons différentiels (111-114) ou les seconds pignons différentiels (121-124) sont positionnés rotatifs et qui sont reliés en position fixe aux plaques de support (301-304) du tendeur centré (4).

7. Tendeur jumelé selon l'une des revendications 1 à 6, **caractérisé en ce que** l'une des premières mâchoires de serrage (611) du premier logement (61) est reliée en position fixe avec le troisième support synchrone (33) et l'autre première mâchoire de serrage (612) du premier logement (61) est reliée en position fixe avec le second support synchrone (32) et l'une des secondes mâchoires de serrage (621) du second logement (62) est reliée en position fixe avec le premier support synchrone (31) et l'autre seconde mâchoire de serrage (622) du second logement (62) est reliée en position fixe avec le quatrième support synchrone (34).

8. Procédé pour le serrage simultané de deux sections de profilé long (71, 72) avec un tendeur jumelé (1) selon l'une des revendications précédentes, les deux sections de profilé long (71, 72) étant serrées fermement et les axes médians (D71, D72) des sections de profilé long serrées (71 72) se positionnant alors indépendamment de la grandeur des diamètres extérieurs des sections de profilé long (71, 72) et une première section de profilé long (71) étant saisie avec le premier logement (61) et une seconde section de profilé long (72) avec le second logement (62), la première section de profilé long (71) présentant un plus grand diamètre que celui de la seconde section de profilé long (72), le tendeur centré (4) étant fermé et le premier logement (61) et le second logement (62) étant fermés ainsi jusqu'à ce que la première section de profilé long (71) soit serrée en étant bloquée en rotation dans le premier logement (61), les deux différentiels (41, 42) étant ensuite activés par la poursuite de la fermeture du tendeur centré (4) et le second logement (62) étant fermé et le mouvement des deux secondes mâchoires de serrage (621, 622) du second logement (62) étant synchronisé par les deux engrenages synchrones (51, 52).
